# EUROPÄISCHE PATENTANMELDUNG

(11) **EP 4 086 717 A1**
(43) Veröffentlichungstag der Anmeldung: **09.11.2022**
(21) Anmeldenummer: 21171832.5
(22) Anmeldetag: 03.05.2021
(51) Int. Cl.: G05B 19/418

(54) **HERSTELLUNGSVERFAHREN FÜR EINE OPERATOR TRAINING STATION, LEITSYSTEM, AUTOMATISIERTE ANLAGE UND COMPUTERPROGRAMMPRODUKT**

(71) Anmelder: Siemens Aktiengesellschaft, 80333 München (DE)
(72) Erfinder: Lutz, Benjamin, 76327 Pfinztal (DE); Wolf, Gerrit, 76187 Karlsruhe (DE)

(57) **Zusammenfassung**

Die Erfindung betrifft ein Herstellungsverfahren (100) für eine Operator Training Station (10) einer automatisierten Anlage (20), auf der ein Anlagenprozess (25) durchzuführen ist. Das Herstellungsverfahren (100) umfasst einen ersten Schritt (110), in dem ein Erstellen eines Layouts (29) der automatisierten Anlage (20) erfolgt, das eine Mehrzahl an Geräten (22) umfasst. Die Geräte (22) sind jeweils in einer einstellbaren Gerätesimulation (42) abgebildet. In einem zweiten Schritt (120) wird eine Steuerungssimulation (50) bereitgestellt und diese mit zumindest einer der Gerätesimulationen (42) verknüpft. Dadurch ist eine Kommunikation zwischen der der Steuerungssimulation (50) zugrundeliegenden Steuereinheit (30) und dem der zumindest einen Gerätesimulation (42) zugrundeliegenden Gerät (22) nachgestellt. Es folgt ein dritter Schritt (130), in dem ein Anlegen einer Prozesssimulation (45) anhand von geräteunabhängigen Prozessdaten (33) erfolgt. In einem vierten Schritt (140) wird die Prozesssimulation (45) durch gerätebezogene Daten (34) aus der zumindest einen Gerätesimulation (42) ergänzt. Erfindungsgemäß werden im ersten Schritt (110) in der zumindest einen Gerätesimulation (42) prozessbezogene Gerätedaten (36) hinterlegt, die unabhängig von der im Schritt b) nachgestellten Kommunikation sind. Die Erfindung betrifft auch eine Operator Training Station (10), die mittels eines solchen Herstellungsverfahrens (100) hergestellt ist und ein Leitsystem (70), das solch eine Operator Training Station 10 aufweist. Gleichermaßen betrifft die Erfindung eine automatisierte Anlage (20) mit einem derartigen Leitsystem (70) und ein Computerprogrammprodukt (60), das zur Durchführung des erfindungsgemäßen Herstellungsverfahrens (100) ausgebildet ist.

## Beschreibung

Die Erfindung betrifft ein Herstellungsverfahren für eine Operator Training Station und ein Leitsystem für eine automatisierte Anlage. Die Erfindung betrifft ebenso eine entsprechende automatisierte Anlage und ein Computerprogrammprodukt zu einer Durchführung des Herstellungsverfahrens.

Die Patentanmeldung DE 10 2011 077 319 A1 offenbart ein Simulationssystem, mit dem ein in einer technischen Anlage ablaufender Prozess nachstellbar ist. Das Simulationssystem umfasst unterschiedliche Ablaufumgebung, die als Container ausgebildet sind und dazu dienen, die Automatisierung selbst, die Hardware der Peripherie eines Leitsystems und den auf der Anlage ablaufenden Prozess nachzustellen. Das Simulationssystem wird mit den gleichen Engineering-Werkzeugen erstellt wie ein reales Leitsystem, das durch das Simulationssystem imitiert wird.

In automatisierten Anlagen besteht eine Tendenz zu einem steigenden Grad an Komplexität, wodurch die Anforderungen an einen Benutzer, beispielsweise einen Anlagen-Operator, steigen. Ebenso wird bei automatisierten Anlagen zunehmend Flexibilität gefordert, so dass modifizierte Layouts der automatisierten Anlage öfter auftreten. Daraus ergibt sich ein erhöhter Bedarf an sogenannten Operator Training Stations, die eine Erprobung modifizierter Layouts erlaubt und eine entsprechende Ausbildung der Benutzer. Der Erfindung liegt die Aufgabenstellung zugrunde, Operator Training Stations bereitzustellen, die in einfacher und zuverlässiger Weise anpassbar sind.

Die Aufgabenstellung wird durch ein erfindungsgemäßes Herstellungsverfahren für eine Operator Training Station einer automatisierten Anlage gelöst. Unter der Operator Training Station ist im Wesentlichen ein Imitat eines Leitstandes mit einem Leitsystem zu verstehen, mit der ein vorgebbarer Ausgangspunkt für einen Betrieb der automatisierten Anlage vorgebbar ist und von dort ausgehend weiter simulierbar ist. Die automatisierte Anlage kann dabei beispielsweise eine Fertigungsstraße, ein Chemiewerk, oder ein Kraftwerk sein. In der automatisierten Anlage ist in einem bestimmungsgemäßen Betrieb ein Anlagenprozess durchzuführen, der zu einer Herstellung eines Produkts ausgebildet sein kann. Das Herstellungsverfahren umfasst einen ersten Schritt, in dem ein Erstellen eines Layouts der automatisierten Anlage erfolgt. Das Layout, und damit auch korrespondierend die automatisierte Anlage, umfasst eine Mehrzahl an Geräten, mit denen der Anlagenprozess zumindest teilweise durchzuführen ist. Das Erstellen des Layouts wird auch an Engineering bezeichnet und gibt unter anderem vor, wie viele Geräte welchen Typs zur Durchführung des Anlagenprozess auf welche Weise miteinander verknüpft sind. Durch den ersten Schritt wird somit das reale Vorbild der mit der Operator Training Station nachzustellenden automatisierten Anlage zumindest in ihrem Aufbau vorgegeben. Die Geräte, die zum erstellten Layout gehören, sind jeweils in einer einstellbaren Gerätesimulation abgebildet, die ebenfalls für das weitere Herstellungsverfahren bereitgestellt werden. Die Gerätesimulationen können als selbsttätig ausführbare Simulationen ausgebildet sein. Die Gerätesimulationen sind insoweit einstellbar, dass bei diesen eine Konfiguration und/oder Parametrierung durchführbar ist. Insbesondere können die Gerätesimulationen jeweils korrespondierend einer Konfiguration und/oder Parametrierung im Layout ausgebildet sein.

In einem zweiten Schritt wird eine Steuerungssimulation bereitgestellt, die mit zumindest einer der Gerätesimulationen verknüpft wird. Die Steuerungssimulation kann beispielsweise als eine Simulation eines Leitrechner, einer Speicherprogrammierbaren Steuerung oder eines Leitalgorithmus ausgebildet sein. Die Steuerungssimulation stellt in einer Prozesshierarchie eine der zumindest einen verknüpften Gerätesimulation übergeordnete Einheit dar. Durch das Verknüpfen im zweiten Schritt wird eine Kommunikation nachgestellt, die in einem bestimmungsgemäßen Betrieb der Kommunikation zwischen einem Gerät und einer Steuereinheit erfolgt, die jeweils der Steuerungssimulation und der Gerätesimulation zugrunde liegen.

Ebenso umfasst das Herstellungsverfahren einen dritten Schritt, in dem eine Prozesssimulation angelegt wird. Die Prozesssimulation stellt hierbei im Wesentlichen ein übergeordnetes Abbild des Anlagenprozesses dar. Das Anlegen der Prozesssimulation erfolgt anhand von geräteunabhängigen Prozessdaten. Zu den geräteunabhängigen Prozessdaten gehören sämtliche Angaben gehören, die den Anlagenprozess beeinflussen, jedoch nicht als Eigenschaft oder Attribut eines der Geräte bzw. einer der Gerätesimulationen darstellbar ist. Durch die Prozesssimulation sind insbesondere physikalische und/oder chemische Einwirkungen auf ein Prozessmedium, also ein durch den Anlagenprozess zu verarbeitenden Gut, nachstellbar. In einem vierten Schritt erfolgt ein Ergänzen der Prozesssimulation durch gerätebezogene Daten, die aus der zumindest einen Gerätesimulation entnommen sind, die durch den zweiten Schritt mit der Steuerungssimulation verknüpft ist. Zu den gerätebezogenen Daten gehören Angaben, die die Einwirkung des entsprechenden Geräts im Zusammenwirken mit der Steuereinheit auf den Anlagenprozess charakterisiert, bzw. der Gerätesimulation auf die Prozesssimulation. Gerätebezogene Daten stellen unter anderem Angaben dar, die eine Regelungsschleife im Anlagenprozess bzw. der Prozesssimulation charakterisieren. Beispielsweise gehört eine Einstellung eines Reglers, der eine Kühlwasserzufuhr regelt, zu den gerätebezogenen Daten. Die Gerätesimulationen, die im zweiten Schritt bereitgestellt werden, weisen die gerätebezogenen Daten jeweils auf. Im Wesentlichen wird im vierten Schritt zwischen der Prozesssimulation und der zumindest einen Gerätesimulation ein dem Anlagenprozess korrespondierender Zusammenhang hergestellt.

Erfindungsgemäß werden im ersten Schritt, in dem das Layout erstellt wird, in der zumindest einen Gerätesimulation, die durch den zweiten Schritt mit der Steuerungssimulation verknüpft wird, prozessbezogene Gerätedaten hinterlegt. Prozessbezogene Gerätedaten sind im Wesentlichen als das Gegenstück zu geräteunabhängigen Prozessdaten aufzufassen, also als Daten, die an das Gerät gebunden sind, das der verknüpften Gerätesimulation zugrunde liegt. Die geräteunabhängigen Prozessdaten können unter anderem inhärente Eigenschaften des Geräts beschrieben. Darunter fallen unter anderem Angaben, die ein Betriebsverhalten des entsprechenden Geräts widerspiegeln, das sich auf den Anlagenprozess auswirken kann, beispielsweise Betriebsgrenzen des Geräts, die jedoch nicht unmittelbar zu den gerätebezogenen Daten aus dem vierten Schritt gehören. Die gerätebezogenen Prozessdaten sind erfindungsgemäß unabhängig von der Kommunikation, die mittels des zweiten Schritts nachzustellen ist. Dementsprechend sind die gerätebezogenen Prozessdaten durch ein Ansteuerungsverhalten der Steuereinheit bzw. der Steuerungssimulation bestimmungsgemäß unveränderlich. Durch das Ergänzen der Prozesssimulation mit den prozessbezogenen Gerätedaten werden dieser der automatisierten Anlage korrespondierende Beschränkungen aufgeprägt. Unzutreffende simulationstypische Vereinfachungen, wie beispielsweise verzögerungsfrei schaltende Ventile oder unendliche druck- und hitzebeständige Dichtungen werden so in der Prozesssimulation vermieden. Die so erstellte Prozesssimulation ist dadurch ebenso mit der zumindest einen Gerätesimulation und der mit ihr verknüpften Steuerungssimulation verknüpft. Diese verknüpften Simulationen wiederum sind funktionell zusammenhängend aufgreifbar und dazu geeignet, als Grundlage für eine Operator Training Station zu dienen, die den Betrieb der automatisierten Anlage nachstellt, zu der das Layout im ersten Schritt erstellt wird.

Die prozessbezogenen Gerätedaten eines Geräts sind vorrangig durch dessen Bauform vorgegeben und liefern Angaben, die prozessrelevant sind, für die eine Prozesssimulation zunächst blind ist. Die prozessbezogenen Gerätedaten sind im ersten Schritt in einfacher Weise, beispielsweise durch einen Entwickler, plausibilisierbar, was wiederum eine Fehlervermeidung erlaubt. Alternativ oder ergänzend sind die prozessbezogenen Gerätedaten im ersten Schritt auch durch ein Verknüpfen von separaten Datenbanken für die Gerätesimulation bereitstellbar. Beschränkungen der Geräte bzw. der Gerätesimulationen sind folglich in einfacher Weise in weitere Ausgestaltungen der Prozesssimulation übernehmbar, was eine besonders arbeitsteilige Durchführung des Herstellungsverfahrens erlaubt. Ein aufwendiges Imitieren von Beschränkungen durch geeignetes Manipulieren von gerätebezogenen Daten oder Einführen zusätzlicher Anpassungsparameter ist dadurch entbehrlich. Mittels des erfindungsgemäßen Herstellungsverfahrens ist auch eine schnelle, präzise und zuverlässige Modifikation einer Operator Training Station möglich. Infolgedessen sind avisierte Modifikationen an einer bestehenden automatisierten Anlage schneller erprobbar, was wiederum eine schnellere Umrüstung der automatisierten Anlage erlaubt. Dadurch ist die potentiell vorhandene Flexibilität einer automatisierten Anlage in erhöhtem Maße ausschöpfbar.

In einer Ausführungsform des beanspruchten Herstellungsverfahrens umfassen die prozessbezogenen Gerätedaten eine physikalische Größe und/oder eine technische Größe des jeweiligen Geräts, der der entsprechenden Gerätesimulation zugrunde liegt. Physikalische und/oder technische Größen können sich als Diskontinuitäten im Verhalten des entsprechenden Geräts, und weitergehend des Anlagenprozesses auswirken. Insbesondere können die prozessbezogenen Gerätedaten einen Nominalfluss, eine Förderhöhe oder einen Förderdruck einer Pumpe, einen KV-Wert eines Ventils, ein Volumen oder Höhe eines Tanks oder Schmelztopfes, eine Position eines Einfüll- oder Auslassstutzens, einen Übertragungskoeffizienten, eine Austauschfläche, einen KV-Wert, ein Material oder eine Bauart eines Wärmetauschers, eine Nenndrehzahl oder ein Nenndrehmoment eines Motors, einen hydraulischen Durchmesser oder Wandrauigkeit eines Rohrs umfassen. Physikalische und/oder technische Größen des jeweiligen Geräts sind im beanspruchten Herstellungsverfahren in sinnfälliger Weise mit der entsprechenden Gerätesimulation verknüpfbar, was eine weitere Erstellung der Prozesssimulation erleichtert, was durch einen Benutzer oder eine Künstliche Intelligenz erfolgen kann.

In einer weiteren Ausführungsform des beanspruchten Herstellungsverfahrens ist zumindest eines der Geräte, das in einer Gerätesimulation nachgestellt ist, als Pumpe, Ventil, Tank, Schmelztopf, Wärmetauscher, Motor, Rohr, als Kolonne, Cracker, Reaktor oder Separator ausgebildet. Derartige Geräte weisen unterschiedliche physikalische und/oder technische Größen auf, die bei einem Überschreiten zu unterschiedlichen Diskontinuitäten führen. Beispielsweise führt ein Überschreiten eines Füllstandes eines Behälters über dessen Volumen zu einem Überlaufen, was jedoch die weitere Funktionstauglichkeit des Behälters nicht verringert. Im Gegensatz hierzu kann ein Überlasten eines Motors zu dessen vorübergehendem oder sofortigem Ausfall führen. Das beanspruchte Herstellungsverfahren ist dazu geeignet, derart unterschiedliche Verhaltensweisen von Geräten in Gerätesimulationen zu berücksichtigen, wodurch sich eine realitätsnahe Prozesssimulation ergibt. Die so hergestellten Operator Training Stations weisen somit eine gesteigerte Simulationstreue auf, was eine aussagekräftige Erprobung von Modifikationen der automatisierten Anlage erlaubt und/oder eine realitätsnahe Benutzerausbildung. Folglich wird so die Betriebssicherheit von automatisierten Anlagen erhöht.

Des Weiteren kann das beanspruchte Herstellungsverfahren im vierten Schritt, in dem die Prozesssimulation durch die gerätebezogenen Daten ergänzt wird, auch durch die im zweiten Schritt bereitgestellte Steuerungssimulation ergänzt wird. Dabei wird die Prozesssimulation über die zumindest Gerätesimulation, deren Kommunikation mit der Steuerungssimulation nachgestellt wird, mit der entsprechenden Steuerungssimulation verknüpft. Durch diese Verknüpfung ist beispielsweise eine Reaktion der automatisierten Anlage auf einen Steuerungseingriff durch die Steuereinheit über die Steuerungssimulation im Zusammenspiel mit der zumindest einen Gerätesimulation und der Prozesssimulation nachstellbar. Infolgedessen ist eine Wirksamkeit eines Steuerungseingriffs in einem vorgebbaren Betriebszustand mittels der Operator Training Station erprobbar. Auch eine modifizierte automatische Reaktion auf einen vorgebbaren Betriebszustand ist so in einfacher Weise erprobbar. Ebenso sind Optimierungen der automatisierten Anlage dadurch per Simulation erprobbar.

Ferner kann die Prozesssimulation, die mit dem beanspruchten Herstellungsverfahren erstellt wird, in einer Operator Station, also im Wesentlichen einem Leitstand, der automatisierten Anlage gespeichert sein. Der Prozesssimulation sind während des Betriebs der automatisierten Anlage Messwerte zuführbar, die mit Resultaten der Prozesssimulation verglichen werden können. Dadurch ist ein kontinuierlicher Abgleich zwischen dem Anlagenprozess und der Prozesssimulation, die auch in der zugehörigen Operator Training Station eingesetzt wird, in einfacher Weise durchführbar. Dies erlaubt es, die Präzision der Prozesssimulation selbsttätig zu verifizieren und bei entsprechend hoher Abweichung zwischen diesen eine Warnung auszugeben. Dies erlaubt es, die die Realitätsnähe der Operator Training Station weiter zu steigern. Insbesondere ist in einer derart hergestellten Operator Training Station eine besonders realistische Simulationsantwort erzeugbar.

Darüber hinaus können die prozessbezogenen Gerätedaten in der entsprechenden Gerätesimulationen zu einer Laufzeit der Prozesssimulation veränderbar ausgebildet. Das Verändern der prozessbezogenen Gerätedaten kann mittels einer Benutzereingabe erfolgen und/oder über einen Datenaustausch mit einem Computerprogrammprodukt. Beispielsweise ist so die Prozesssimulation, die auf der Operator Station der automatisierten Anlage ausgeführt wird, in einfacher Weise an eine Modifikation anpassbar, oder an eine Reparatur, bei der kein typenidentisches Ersatzteil für ein Gerät verwendet wird. Eine Prozesssimulation, die zur Überwachung einer Operator Station eingesetzt, ist dadurch unterbrechungsfrei anpassbar. Ein potentiell gefährlicher Betrieb der automatisierten Anlage ohne überwachende Prozesssimulation wird so vermieden. Ebenso ist eine Reparatur mit einem nicht typenidentischen Ersatzteil bzw. eine Modifikation schnell mit der Operator Training Station im laufenden Betrieb simulierbar. Insbesondere ist es entbehrlich, zur Erprobung einer solchen Modifikation oder Reparatur die Prozesssimulation neu zu initialisieren und den vorliegenden Betriebszustand manuell wieder anzufahren. Dadurch werden eine Reparatur bzw. Modifikation der modifizierten Anlage beschleunigt. Die prozessbezogenen Gerätedaten sind beispielsweise durch einen Editor, der in einer Operator View integriert sein kann, zur Laufzeit der Prozesssimulation veränderbar.

In einer weiteren Ausführungsform des beanspruchten Herstellungsverfahrens können die geräteunabhängigen Prozessdaten auch eine physikalische Größe und/oder eine chemische Eigenschaft des Prozessmedium umfassen. Dazu gehören beispielsweise die Temperatur des Prozessmediums, eine darin vorliegende Stoffkonzentration, einen pH-Wert, oder eine Angabe über dessen Aggregatszustand. Alternativ oder ergänzend können die geräteunabhängigen Prozessdaten auch eine physikalische Größe und/oder chemische Eigenschaft einer Umgebungsbedingung umfassen. Dies kann beispielsweise eine Umgebungstemperatur, eine Luftfeuchtigkeit, oder eine Stoffkonzentration in der Umgebung sein. Dadurch ist beispielsweise ein Abkühlverhalten des Prozessmediums an die Umgebungsluft, oder dessen Oxidationsverhalten in der Umgebungsluft im Rahmen der Prozesssimulation nachstellbar. Die Prozesssimulation ist dadurch ohne Weiteres an eine Vielzahl an Anlagenprozessen anpassbar. Die Anpassbarkeit der Prozesssimulation für die Operation Training Station wird so weiter verbessert, so dass eine realitätsnähere Operator Training Station bereitstellbar ist.

Des Weiteren kann im vierten Schritt des beanspruchten Herstellungsverfahrens die Prozesssimulation um eine einstellbare Mehrzahl an Gerätesimulationen ergänzt werden, um so einen einstellbaren Abschnitt der automatisierten Anlage zu simulieren. Die Prozesssimulation ist so auf eine teilweise Simulation der automatisierten Anlage vereinfachbar. Das Einstellen, also Auswählen, des entsprechenden Abschnitts der automatisierten Anlage kann hierbei durch einen Benutzer erfolgen. In analoger Weise ist einstellbar, welche Geräte des entsprechenden Abschnitts der automatisierten Anlage zur Erstellung der Prozesssimulation erforderlich sind. Das beanspruchte Herstellungsverfahren bietet ein erhöhtes Maß an Skalierbarkeit, durch die auch besonders komplexe automatisierte Anlagen in übersichtlichen Abschnitten simulierbar ist. Dadurch kann die erforderliche Rechenleistung für die Prozesssimulation, die der herzustellenden Operator Training Station zugrunde liegt, gering gehalten werden. Dies wiederum ermöglicht es, auch besonders komplexe automatisierte Anlagen mit relativ einfacher Hardware realitätsnah zu simulieren.

Die zugrundeliegende Aufgabenstellung wird auch durch eine erfindungsgemäße Operator Training Station einer automatisierten Anlage gelöst. Die Operator Training Station ist dabei im Wesentlichen baugleich zu einer Operator Station, also einem Leitstand, der automatisierten Anlage ausgebildet. Die Operator Training Station umfasst eine Prozesssimulation, die ausführbar auf einer zugehörigen Hardwareplattform ausführbar ist und die eine Mehrzahl an Gerätesimulationen aufweist. Die Gerätesimulationen sind dazu ausgebildet, das Verhalten von Geräten zu simulieren, durch die ein Anlagenprozess in der automatisierten Anlage durchgeführt wird. Die Gerätesimulationen sind mit einer Steuerungssimulation verknüpft, die mit der Prozesssimulation zusammenwirkt oder von dieser umfasst ist. Durch die Steuerungssimulation wird das Verhalten einer Steuereinheit nachgestellt, durch die der Anlagenprozess in der automatisierten Anlage geregelt und/oder gesteuert wird. Die Prozesssimulation umfasst ferner prozessbezogene Gerätedaten, die in den zugehörigen Gerätesimulationen verwendet werden. Erfindungsgemäß sind die prozessbezogenen Gerätedaten von den jeweiligen Gerätesimulationen umfasst, also in einer den Gerätesimulationen eigenen Datenstruktur gespeichert. Die prozessbezogenen Gerätedaten sind dadurch in einfacher Weise im Betrieb zugänglich und veränderbar. Ferner werden die prozessbezogenen Gerätedaten so in vorteilhafter Weise mit ihren jeweiligen Gerätesimulationen verknüpft, so dass diese bei einem weiteren Herstellen der Operator Training Station einem Benutzer ohne Weiteres in sinnfälliger Weise bereitgestellt werden. Hierdurch wird die Herstellung eines realitätsnahen Abbilds des Anlagenprozesses vereinfacht. Die beanspruchte Operator Training Station ist in einfacher Weise kosteneffizient herstellbar bzw. anpassbar und weist einen gesteigerten Realitätstreue auf.

In einer Ausführungsform der beanspruchten Operator Training Station ist diese mittels eines Herstellungsverfahrens nach einer der oben dargestellten Ausführungsformen hergestellt. Dadurch werden die technischen Vorzüge des beanspruchten Herstellungsverfahrens auf die so bereitgestellte Operator Training Station übertragen.

Gleichermaßen wird die eingangs dargelegte Aufgabe durch ein erfindungsgemäßes Leitsystem gelöst, das als Leitstelle einer automatisierten Anlage einsetzbar ist. Das Leitsystem umfasst eine Operator Station, die zu einem Steuern zumindest eines Abschnitts der automatisierten Anlage ausgebildet ist. Das Leitsystem umfasst auch eine Operator Training Station, die zu einem Simulieren eines Betriebs zumindest eines Abschnitts der automatisierten Anlage ausgebildet ist. Die gesteuerten und simulierten Abschnitte der automatisierten Anlage können dazu identisch, teilweise überlappend oder unterschiedlich, also zueinander disjunkt, ausgebildet sein. Dazu verfügt die Operator Training Station über eine Prozesssimulation, die mit der automatisierten Anlage korrespondiert. Erfindungsgemäß ist die Prozesssimulation zu einem betriebsparallelen Anpassen durch ein Editieren von prozessbezogenen Gerätedaten ausgebildet, die in der Prozesssimulation gespeichert sind. Hierzu kann die Operator Training Station gemäß einer oben skizzierten Ausführungsformen ausgebildet sein und/oder mittels eines der oben beschriebenen Herstellungsverfahren hergestellt sein.

Ebenso wird die Aufgabenstellung durch eine erfindungsgemäße automatisierte Anlage gelöst, durch die ein Anlagenprozess ausführbar ist. Die automatisierte Anlage umfasst ein Leitsystem, über die die automatisierte Anlage zumindest teilweise steuerbar ist, und die eine Operator Station und eine Operator Training Station umfasst. Das Leitsystem ist erfindungsgemäß nach einer der oben beschriebenen Ausführungsformen ausgebildet.

Ferner wird die Aufgabe durch ein erfindungsgemäßes Computerprogrammprodukt gelöst, das zu einem Erstellen einer Prozesssimulation für eine Operator Training Station in einer automatisierten ausgebildet ist. Das Computerprogrammprodukt ist erfindungsgemäß dazu ausgebildet, zumindest eines der oben skizzierten Herstellungsverfahren umzusetzen. Insbesondere kann das Computerprogrammprodukt als eine Engineering-Werkzeug ausgebildet sein, die zu einem Projektieren einer automatisierten Anlage ausgebildet ist. Das Computerprogrammprodukt kann zum Durchführen des erfindungsgemäßen Herstellungsverfahrens über Schnittstellen verfügen, über die prozessbezogene Gerätedaten in zumindest einer Gerätesimulation editierbar und/oder speicherbar sind.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch einer erste Ausführungsform des beanspruchten Herstellungsverfahrens;
- FIG 2: schematisch den Aufbau eines Abschnitts einer Ausführungsform der beanspruchten automatisierten Anlage;

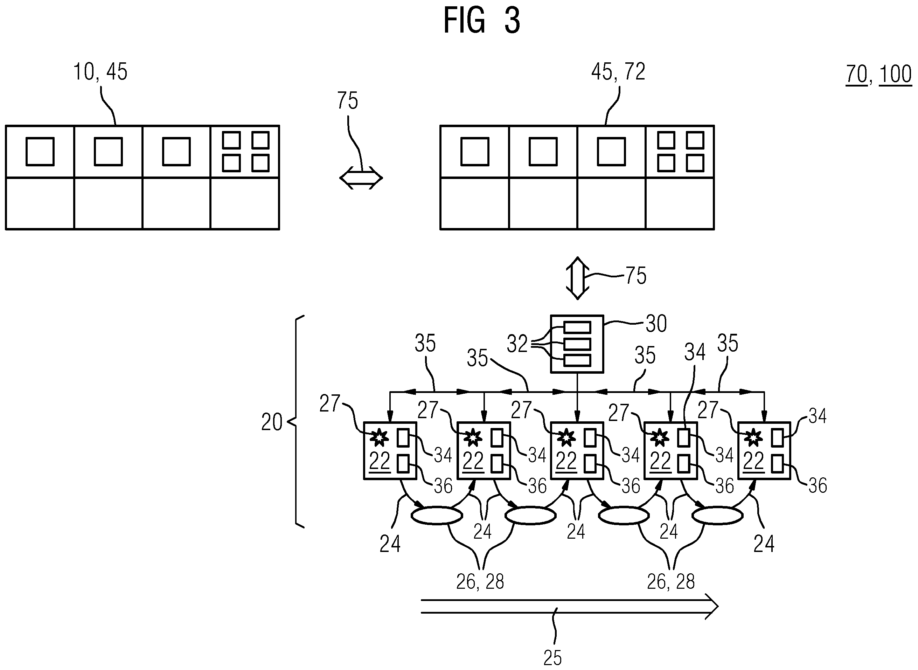

- FIG 3: den Aufbau einer Ausführungsform des beanspruchten Leitsystems.

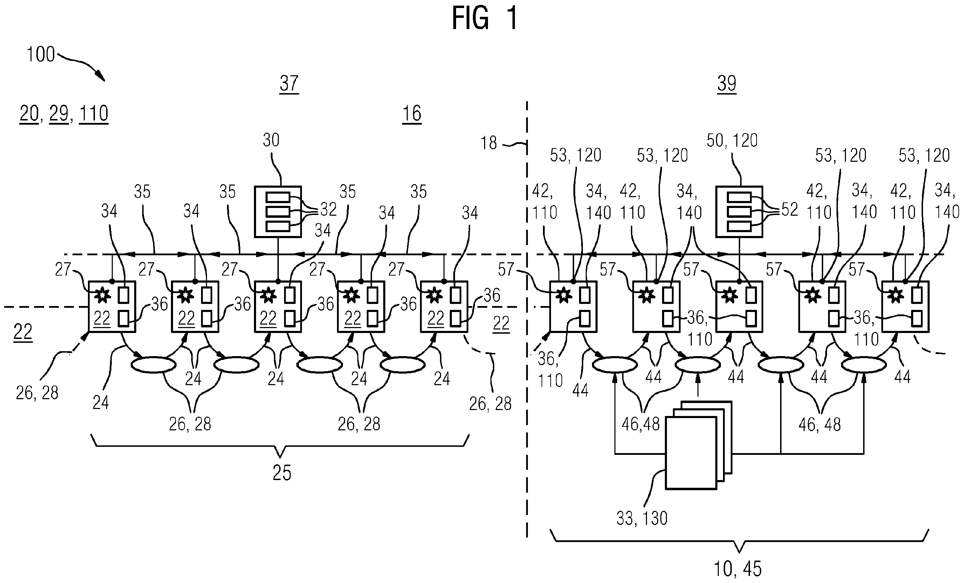

In FIG 1 ist schematisch eine erste Ausführungsform des beanspruchten Herstellungsverfahrens 100 für eine Operator Training Station 10 dargestellt. Das Herstellungsverfahren 100 läuft dabei teilweise in einer Real-Domäne 37 ab, die einer existierenden oder einer herzustellenden automatisierten Anlage 20 entspricht. Ebenso läuft das Herstellungsverfahren 100 teilweise in einer Simulations-Domäne 39 ab, in der sich eine Prozesssimulation 45 verkörpert, die als Grundlage für die herzustellende Operator-Training-Station 10 dient. In einem ersten Schritt 110 des Herstellungsverfahrens 100 wird ein Layout 29 einer automatisierten Anlage 20 bereitgestellt, die beispielsweise eine Prozessanlage, insbesondere zur Chemikalien-, Lebensmittel-, Glas-, Medikament-, Stahl- oder Zementherstellung, zur Behandlung von Wasser bzw. Abwasser, ein Kraftwerk oder ein Verkehrsleitsystem sein kann. Das Layout 29 umfasst eine Steuereinheit 30, die über Signale 35 kommunikationsfähig mit einer Mehrzahl an Geräten 22 verbunden ist, bzw. die entsprechende Abbildung hiervon. In der Steuereinheit 30 sind Kommunikationsdaten 32 gespeichert, durch die die Kommunikation mit den jeweiligen Geräten 22 koordinierbar ist. Die Steuereinheit 30 kann beispielsweise als Leitrechner, Computer-Cloud, Controller oder Speicherprogrammierbare Steuerung ausgebildet sein. In der automatisierten Anlage 20 wird ein Prozessmedium 24 zu den Geräten 22 transportiert, die auf das Prozessmedium 24 einwirken. Die Einwirkungen 28 der Geräte 22 stellen Prozessschritte 26, die ineinandergreifen und dadurch im Zusammenwirken einen Anlagenprozess 25 verwirklichen. Die Ablaufrichtung des Anlagenprozesses 25 ist hierbei durch die Pfeilrichtungen an den Prozessschritten 26 versinnbildlicht. FIG 1 zeigt einen Ausschnitt der automatisierten Anlage 20, was durch die unterbrochenen Linien abgebildet ist. Durch den Anlagenprozess 25 ist aus dem Prozessmedium 24 ein Produkt 15 herzustellen. In den entsprechenden Geräten 22 sind jeweils gerätebezogene Daten 34 gespeichert, die die Art der Einwirkung 28 des jeweiligen Geräts 22 auf das Prozessgut 24 darlegen und/oder eine Kommunikation mit der Steuereinheit 30 koordinieren. Die gerätebezogenen Daten 34 betreffen insbesondere eine Konfiguration und/oder Parametrierung des jeweiligen Geräts 22 und sind beim Erstellen des Layouts 29 durch einen Benutzer einstellbar, also editierbar. Dazu weisen die Geräte 22 jeweils eine Schnittstelle 27 auf. Auch die gerätebezogenen Daten 34 sind vom Layout 29 umfasst. Weiter werden im ersten Schritt 110 zu den Geräten 22 korrespondierend Gerätesimulationen 42 zum Herstellen der Prozesssimulation 45 in der Simulations-Domäne 39 bereitgestellt. Die Gerätesimulationen 22 sind jeweils Abbildungen der jeweiligen Geräte 22 und können beispielsweise einer nicht näher gezeigten Datenbank entnommen werden. Die Gerätesimulationen 42 weisen korrespondierend zu den Geräten 22 gerätebezogene Daten 34 auf, die die Funktionsweise bzw. Wirkungsweise der Gerätesimulationen 42 im Zusammenhang mit der Prozesssimulation 45 im Sinne einer Konfiguration und/oder Parametrierung vorgeben.

In einem zweiten Schritt 120 wird eine Steuerungssimulation 50 bereitgestellt, die in der Simulations-Domäne 39 der Steuereinheit 30 in der Real-Domäne 37 entspricht. Die Steuerungssimulation 50 weist simulierte Kommunikationsdaten 52 auf, die den Kommunikationsdaten 32 in der Steuereinheit 30 entsprechen. Die Steuerungssimulation 50 wird im zweiten Schritt 120 ebenso mit den Gerätesimulationen 42 verknüpft. Durch das Herstellen der Verknüpfung 53 ist die Kommunikation, die in der Real-Domäne 37 zwischen der Steuereinheit 30 und den Geräten 22 erfolgt, in der Simulations-Domäne 39 nachstellbar. Im Umfang der über die Verknüpfungen 53 erfolgenden simulierten Kommunikation ist beispielsweise eine virtuelle Schnittstelle 57 in den Gerätesimulationen 242 ansteuerbar, die im Wesentlichen den Schnittstellen 27 der Geräte 22 in der Real-Domäne 37 entsprechen. Durch das Durchführen des zweiten Schritts 120 wird im Wesentlichen der Aufbau in puncto der Geräte 22 und der Steuereinheit 30 in der Simulations-Domäne 39 abgebildet.

Das Herstellungsverfahren 100 umfasst einen dritten Schritt 130, in dem eine Prozesssimulation 45 angelegt wird, die übergreifend des Anlagenprozess 25 widerspiegelt. Dazu werden im dritten Schritt 130 geräteunabhängige Prozessdaten 33 bereitgestellt, die unter anderem physikalische und/oder chemische Eigenschaften des Prozessmediums 24 und/oder einer Umgebung 16, in der der Anlagenprozess 25 abläuft, umfassen. Alternativ oder ergänzend umfassen die geräteunabhängigen Prozessdaten 33 Angaben über die Wirkungsweise 28 des jeweiligen Geräts 22 auf das Prozessmedium 24. Dies kann eine physikalische Modellierung umfassen, die den entsprechenden Prozessschritt 26 beschreibt, beispielsweise ein Modell eines Verformungsverhaltens oder ein thermisches Modell des Prozessguts 24.

In einem vierten Schritt 140 wird die bereits im dritten Schritt 130 angelegt Prozesssimulation 45 durch die gerätebezogenen Daten 34 ergänzt, die in den jeweiligen Gerätesimulationen 42 bzw. den zugehörigen Geräten 22 in der Real-Domäne 37 hinterlegt sind. Infolgedessen ist unter anderem eingeschränkt, in welcher Weise, insbesondere mit welcher Intensität, eine Gerätesimulation 42 im Zuge eines simulierten Prozessschritts 46 auf ein simuliertes Prozessgut 44 einwirken kann. Das simulierte Prozessgut 44 stellt hierbei ein Abbild des Prozessguts 24 dar. Mittels der gerätebezogenen Daten 34 werden im vierten Schritt 140 auch die zu erwartenden simulierte Einwirkungen 48 auf das simulierte Prozessgut 44 vorgegeben oder beschränkt. Im vierten Schritt 140 wird so eine Verbindung zwischen dem in der Simulations-Domäne 39 abgebildeten Aufbau an Geräten 22 in Form von Gerätesimulationen 42 und deren Einwirkungen 28 bzw. simulierten Einwirkungen 48 hergestellt. Dadurch ist auch die Auswirkungen einer Reaktion der Steuerungssimulation 50 auf eine sich einstellende simulierte Betriebssituation innerhalb der Prozesssimulation 45 erprobbar. Infolgedessen ist durch den vierten Schritt 140 eine Prozesssimulation 45 funktionstüchtig bereitgestellt, die den Analgenprozess 25 auf der automatisierten Anlage 20 abbildet, wobei auch dynamische Betriebszustände nachstellbar sind, in denen die Steuerungssimulation 50 auf eine vorliegende simulierte Betriebssituation reagiert. Die Prozesssimulation 45 ist als Grundlage für eine herzustellende Operator Training Station 10 geeignet.

Im Rahmen des ersten Schritts 110 werden in den Gerätesimulationen 22 jeweils auch prozessbezogene Gerätedaten 36 hinterlegt. Die prozessbezogenen Gerätedaten 36 beschreiben für die Geräte 22, die in der entsprechenden Gerätesimulation 42 abgebildet sind, physikalische und/oder technische Größen, die die Funktionsweise und/oder Beschränkungen des jeweiligen Geräts 22 charakterisieren. Je nach Typ des zugehörigen Geräts 22 wird durch die gerätebezogenen Daten 36 beschrieben, bei welchen Bedingungen mit Diskontinuitäten im Betrieb des Geräts 22 zu rechnen ist. Dies kann beispielsweise ein maximales Fassungsvermögen eines offenen Tanks als Gerät 22 sein, der überläuft, wenn das Fassungsvermögen ausgeschöpft ist. Alternativ oder ergänzend können die gerätebezogenen Prozessdaten auch Temperaturgrenzen beschreiben, bei denen mit einem vorübergehenden oder endgültigen Ausfall eines Motors, also eines Geräts 22, zu rechnen ist. Die gerätebezogenen Daten 36 sind einer nicht näher gezeigten Datenbank entnehmbar, die bei einer Erstellung des Layouts 29 im ersten Schritt 110 zugänglich ist. Die gerätebezogenen Prozessdaten 36 sind in der Real-Domäne 37 beim Erstellen des Layouts 29 für die automatisierte Anlage 20 irrelevant, da die gerätebezogenen Prozessdaten 36 jeweils inhärente Eigenschaften des entsprechenden Geräts 22 darstellen. Dementsprechend sind die gerätebezogenen Prozessdaten 36 durch die Einwirkungen 28 in den Prozessschritten 26 bzw. den simulieren Einwirkungen 48 in den simulierten Prozessschritten 26 unveränderlich. Die simulierten Schnittstellen 57 in der Prozesssimulation 45 erlauben einem Benutzer zu einer Laufzeit der Prozesssimulation 45 Zugriff auf die prozessbezogenen Gerätedaten 36. Die Prozesssimulation 45 ist dadurch in einfacher Weise anpassbar. Über ein entsprechendes Editieren der prozessbezogenen Gerätedaten 36 ist beispielsweise ein Ersatz eines Geräts 22 durch ein nicht-identisches Ersatzteil simulierbar.

Die in im ersten, zweiten, dritten und vierten Schritt 110, 120, 130, 140 hergestellte Prozesssimulation 45 ist auf einer Operator Training Station 10 ausführbar und stellt deren funktionale Grundlage dar. Die prozessbezogenen Gerätedaten 36 sind bereits beim Erstellen des Layouts 29 in der Real-Domäne 37 in einfacher Weise bereitstellbar. Die in der Prozesssimulation 45 abgebildeten simulierten Prozessschritte 46 sind durch die prozessbezogenen Gerätedaten 36 ergänzbar, so dass die sich daraus ergebenden möglichen Diskontinuitäten exakt nachstellbar sind. Dadurch wird die Realitätstreue der Prozesssimulation 45 erhöht und gleichzeitig deren Herstellung vereinfacht. Die in FIG 1 gezeigten Schritte 110, 120, 130, 140 sind mittels eines nicht näher gezeigten Computerprogrammprodukts 60 ausführbar, das zum Durchführen des Herstellungsverfahrens 100 ausgebildet ist. Das Computerprogrammprodukt 60 ist als Engineering-Werkzeug ausgebildet, mit dem die automatisierte Anlage 20 projektierbar ist.

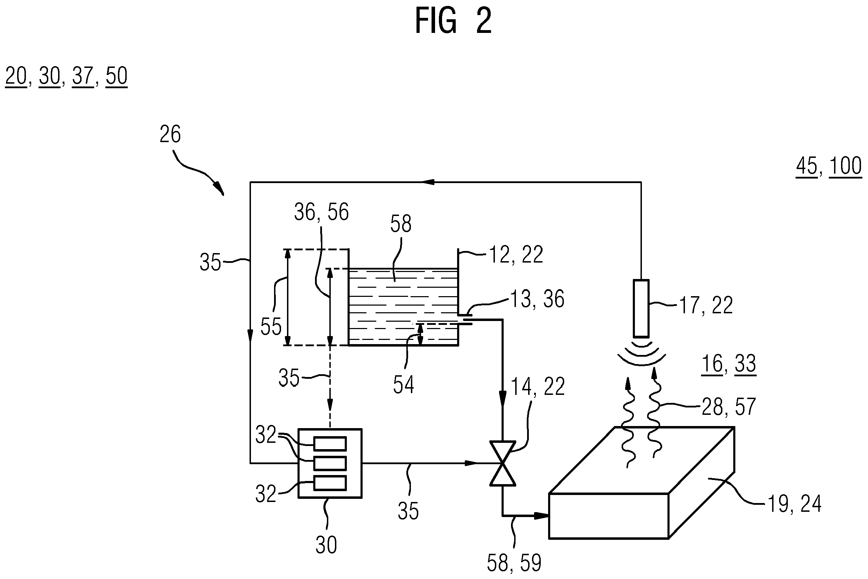

Ein Abschnitt einer Ausführungsform einer beanspruchten automatisierten Anlage 20 ist in FIG 2 näher gezeigt. Die automatisierte Anlage 20 ist im Sinne von FIG 1 der Real-Domäne 37 zuzurechnen. Der abgebildete Abschnitt umfasst als Geräte 22 einen Tank 12 für Kühlwasser 58, ein Ventil 14 und einen Temperatursensor 17. Die Geräte 22 sind kommunikativ mit einer Steuereinheit 30 verbunden, in der Kommunikationsdaten 32 gespeichert sind, mittels derer die Kommunikation der Steuereinheit 30 mit den Geräten 22 koordinierbar ist. Beim Prozessschritt 26 wird mit dem Temperatursensor 17 eine Temperatur 19 des Prozessmediums 24 erfasst. Das Prozessmedium 24 befindet sich in einer Umgebung 16, die kälter ist als das Prozessmedium 24 selbst. Eine Umgebungstemperatur stellt eine inhärente Eigenschaft der Umgebung 16 dar und gehört in einer Prozesssimulation 45, die nach dem beanspruchten Herstellungsverfahren 100 hergestellt wird, zu den geräteunabhängigen Prozessdaten 33.

Auf das Prozessmedium 24 wird im Prozessschritt 26 über das Ventil 14 Kühlwasser 58 gegeben, um die Temperatur 19 des Prozessmediums 24 einzustellen. Im Zusammenspiel mit der kälteren Umgebung 16 und einem einstellbaren Kühlwasserfluss 59 ergibt sich für das Prozessmedium 24 eine veränderliche Wärmeabgabe 57. Die veränderliche Wärmeabgabe 57 stellt eine Einwirkung 28 in Sinne des beanspruchten Herstellungsverfahrens 100 dar. Der Kühlmittelfluss 59 ist durch das Ventil 14 einstellbar, das über ein Signal 35 der Steuereinheit 30 betätigbar ist. Ferner hängt der Kühlmittelfluss 59 von einem Füllstand 56 des Tanks 12 ab. Durch einen Maximalfüllstand 55 des Tanks 12 ist die auf einmal über das Ventil 14 abgebbare Menge an Kühlwasser 58 prinzipbedingt begrenzt. Prozessbezogen sind die maximal abgebbare Menge an Kühlwasser 58 und der erreichbare Kühlwasserfluss 59 über den aktuell vorliegenden Füllstand 56 in Verbindung mit der Stutzenhöhe 54 eines Auslassstutzens 13 am Tank 12 begrenzt. Der Maximalfüllstand 55 des Tanks 12, also eines Geräts 22, gehört im Sinne des beanspruchten Herstellungsverfahrens 100 zu den prozessbezogenen Gerätedaten 36. Ebenso wird die Stutzenhöhe 54 zu den prozessbezogenen Gerätedaten 36 gezählt.

Eine Prozesssimulation 45, die mittels des beanspruchten Herstellungsverfahrens 100 hergestellt ist, ist dazu geeignet, ein Überlaufen des Tanks 12 und/oder ein Leerlaufen des Tanks 12 abzubilden und in die Prozesssimulation 45 einzubringen. Durch ein derartiges Ereignis wird im Anlagenprozess 25, der durch die Prozesssimulation 45 nachgestellt wird, eine Diskontinuität hervorgerufen, die als solche nicht Teil einer Regelkreisbetrachtung des Prozessmediums 24 ist, und damit auch nicht Teil einer Steuereinheit 30 bzw. Steuerungssimulation 50. Infolgedessen ist die Prozesssimulation 45 dazu geeignet, in einer nicht näher gezeigten Operator Training Station 10 das Betriebsverhalten der automatisierten Anlage 20 realitätstreu nachzubilden. Die prozessbezogenen Gerätedaten 36 sind derartig in der Prozesssimulation 45 hinterlegt, dass diese durch einen Benutzer editierbar sind, wodurch reale oder avisierte Modifikationen an der automatisierten Anlage 20 in sinnfälliger, und damit einfacher Weise, simulierbar sind. Modifikationen am Tank 12, am Ventil 14, und/oder am Temperatursensor 17 sind schnell in die Prozesssimulation 45 implementierbar, so dass Auswirkungen auf die automatisierte Anlage 20 zuverlässig erprobbar sind. Die Prozesssimulation 45, die den Anwendungsfall wie in FIG 2 gezeigt nachstellt, ist durch ein Herstellungsverfahren 100 nach einer der oben dargestellten Ausführungsformen herstellbar. Dazu kann ein nicht näher gezeigtes Computerprogrammprodukt 60 eingesetzt werden, das zumindest eine Ausführungsform des Herstellungsverfahrens 100 zumindest teilweise umsetzt.

Eine Ausführungsform eines beanspruchten Leitsystems 70, das dazu ausgebildet ist, eine automatisierte Anlage 20 zu steuern, die einen Anlagenprozess 25 durchführt. Die automatisierte Anlage 20 umfasst eine Mehrzahl an Geräten 22, die mit einer Steuereinheit 30 gekoppelt sind. Durch die Geräte 22 sind jeweils zu einer Einwirkung 28 auf ein Prozessmedium 24 ausgebildet, wodurch jeweils ein Prozessschritt 26 durchführbar ist. In der Steuereinheit 30 sind Kommunikationsdaten 32 gespeichert, die eine Kommunikation zwischen der Steuereinheit 30 und den Geräten 22 koordinieren. Die Steuereinheit 30 ist zu einem kommunikativen Datenaustausch 75 mit einer Operator Station 72 ausgebildet. Die Steuereinheit 32 ist dabei durch die Operator Station 72 beeinflussbar oder ist von der Operator Station 72 selbst umfasst. Die Operator Station 72 dient als ein Leitstand der automatisierten Anlage 20 und umfasst eine Prozesssimulation 45, durch die der Anlagenprozess 25 nachstellbar ist. Die Prozesssimulation 45 ist durch eine Ausführungsform des beanspruchten Herstellungsverfahrens 100 herstellbar. Der Ablauf des Anlagenprozesses 20 ist durch die Prozesssimulation 45, die in der Operator Station 72 ausführbar ist, betriebsparallel, also im Wesentlichen in Echtzeit, nachstellbar. Dies erlaubt es unter anderem, unerwartete Betriebszustände im Anlagenprozess 25 zu identifizieren. Das Leitsystem 70 umfasst auch eine Operator Training Station 10, die zu einem kommunikative Datenaustausch 75 mit der Operator Station 72 ausgebildet ist. In der Operator Training Station 10 ist ebenfalls eine Prozesssimulation 45 hinterlegt, die durch eine Ausführungsform des beanspruchten Herstellungsverfahrens 100 herstellbar ist. Die Prozesssimulationen 45 in der Operator Station 71 und der Operator Training Station 10 entsprechen einander, so dass die Funktion der Operator Station 72 auf die Operator Training Station 10 spiegelbar, also duplizierbar, ist. Die Prozesssimulation 45 in der Operator Training Station 10 ist unabhängig vom vorliegenden Anlagenprozess 25 betreibbar, so dass Modifikationen an der automatisierten Anlage 20 durch die Operator Training Station 10 simulierbar sind. Im Zuge einer solchen Modifikation sind prozessbezogene Gerätedaten 36, die beispielsweise technische Beschränkungen eines Geräts 22 darstellen, in der Prozesssimulation 45 in der Operator Training Station 10 durch einen Benutzer editierbar. Dies erlaubt unter anderem das Nachstellen eines Austauschs eines Geräts 22 gegen ein nicht-typenidentisches Gerät 22. Die Operator Training Station 10 ist betriebsparallel zur Operator Station 10, und damit auch betriebsparallel zur automatisierten Anlage 20 zu betreiben. Die Operator Training Station 10 ist so betriebsparallel zur automatisierten Anlage 20 initialisierbar, worauf eine Modifikation der Geräts 22 in der Prozesssimulation 45 auf der Operator Training Station 10 durch Editieren der entsprechenden prozessbezogenen Gerätedaten 36 erfolgt. Daran anschließend ist durch ein Überwachen der automatisierten Anlage 20 prüfbar, ob die Modifikation der Gerätedaten 36, also den simulierten nicht-typenidentischen Austausch eines Geräts 22, zu einer Abweichung vom Anlagenprozess 25 führt. Die Operator Station 72 und die Operator Training Station 10 erlauben dem Leitsystem 70, die automatisierte Anlage 20 zu steuern und gleichzeitig angestrebte Modifikationen zu erproben. Dadurch, dass die Modifikationen durch ein Verändern von prozessbezogenen Gerätedaten 36 erfolgt, sind diese Modifikationen schnell in der Prozesssimulation 45 in der Operator Training Station 10 bereitstellbar. Spiegelbildlich ist die Operator Training Station 10 in genauso einfacher Weise an durchgeführte Modifikationen der automatisierten Anlage 20 anpassbar. Die Operator Training Station 10 ist so schnell und kosteneffizient aktualisierbar, was wiederum eine schnelle, realitätsnahe Ausbildung von Benutzern erlaubt. Die Betriebssicherheit der automatisierten Anlage 20 wird infolgedessen weiter gesteigert.

## Patentansprüche

1. Herstellungsverfahren (100) für eine Operator Training Station (10) einer automatisierten Anlage (20), auf der ein Anlagenprozess (25) durchzuführen ist, umfassend die Schritte:
a) Erstellen eines Layouts (29) der automatisierten Anlage (20), das eine Mehrzahl an Geräten (22) umfasst, die jeweils in einer einstellbaren Gerätesimulation (42) abgebildet sind;
b) Bereitstellen einer Steuerungssimulation (50) und Verknüpfen der Steuerungssimulation (50) mit zumindest einer der Gerätesimulationen (42), wobei eine Kommunikation zwischen der der Steuerungssimulation (50) zugrundeliegenden Steuereinheit (30) und dem der zumindest einen Gerätesimulation (42) zugrundeliegenden Gerät (22) nachgestellt wird;
c) Anlegen einer Prozesssimulation (45) anhand von geräteunabhängigen Prozessdaten (33);
d) Ergänzen der Prozesssimulation (45) durch gerätebezogene Daten (34) aus der zumindest einen Gerätesimulation (42) ;
**dadurch gekennzeichnet, dass** im Schritt a) in der zumindest einen Gerätesimulation (42) prozessbezogene Gerätedaten (36) hinterlegt werden, die unabhängig von der im Schritt b) nachgestellten Kommunikation sind.

2. Herstellungsverfahren (100) nach Anspruch 1, **dadurch gekennzeichnet, dass** die prozessbezogenen Gerätedaten (36) eine physikalische Größe und/oder technische Größe des jeweiligen Geräts (22) umfassen.

3. Herstellungsverfahren (100) nach Anspruch 1 oder 2, **dadurch gekennzeichnet, dass** zumindest eines der Geräte (22) als Pumpe, Ventil (14), Tank (12), Wärmetauscher, Motor oder Rohr ausgebildet ist.

4. Herstellungsverfahren (100) nach einem der Ansprüche 1 bis 3, **dadurch gekennzeichnet, dass** im Schritt d) auch ein Ergänzen der Prozesssimulation (45) durch die im Schritt b) bereitgestellte Steuerungssimulation (50) erfolgt.

5. Herstellungsverfahren (100) nach einem der Ansprüche 1 bis 4, **dadurch gekennzeichnet, dass** die prozessbezogenen Gerätedaten (36) zu einer Laufzeit der Prozesssimulation (45) veränderbar ausgebildet sind.

6. Herstellungsverfahren (100) nach einem der Ansprüche 1 bis 5, **dadurch gekennzeichnet, dass** die Prozesssimulation (45) in einer Operator Station (72) der automatisierten Anlage (20) gespeichert wird.

7. Herstellungsverfahren (100) nach einem der Ansprüche 1 bis 6, **dadurch gekennzeichnet, dass** die geräteunabhängigen Prozessdaten (33) eine physikalische Größe und/oder chemische Eigenschaft eines Prozessmediums (24) und/oder eine Umgebungsbedingung umfassen.

8. Herstellungsverfahren (100) nach einem der Ansprüche 1 bis 7, **dadurch gekennzeichnet, dass** im Schritt d) die Prozesssimulation (45) um eine einstellbare Mehrzahl an Gerätesimulationen (42) ergänzt wird zu einem Simulieren eines einstellbaren Abschnitts der automatisierten Anlage (20).

9. Operator Training Station (10) einer automatisierten Anlage (20), umfassend eine Prozesssimulation ()45, die eine Mehrzahl an Gerätesimulationen (42) aufweist, die mit einer Steuerungssimulation (50) verknüpft sind, wobei die Prozesssimulation (50) prozessbezogene Gerätedaten (36) verwendet, **dadurch gekennzeichnet, dass** die prozessbezogenen Gerätedaten (36) von der jeweiligen Gerätesimulation (42) umfasst sind.

10. Operator Training Station (10) nach Anspruch 9, **dadurch gekennzeichnet, dass** die Operator Training Station (10) mittels eines Herstellungsverfahrens (100) nach einem der Ansprüche 1 bis 8 hergestellt ist.

11. Leitsystem (70) einer automatisierten Anlage (20), umfassend eine Operator Station (72), die zu einem Steuern der automatisierten Anlage (20) ausgebildet ist, und eine Operator Training Station (10), die zu einem Simulieren eines Betriebs der automatisierten Anlage (20) über eine mit der automatisierten Anlage (20) korrespondierenden Prozesssimulation (45) versehen ist, **dadurch gekennzeichnet, dass** die Prozesssimulation (45) zu einem zur automatisierten Anlage (20) betriebsparallelen Anpassen durch ein Editieren von prozessbezogenen Gerätedaten (36) ausgebildet ist.

12. Automatisierte Anlage (20), umfassend eine Mehrzahl an Geräten (22) zur Durchführung eines Anlagenprozesses (25), die über ein Leitsystem (70) zumindest teilweise steuerbar sind, und das Leitsystem (70) eine Operator Station (72) und eine Operator Training Station (10) aufweist, **dadurch gekennzeichnet, dass** das Leitsystem (70) nach Anspruch 11 ausgebildet ist.

13. Computerprogrammprodukt (60) zum Erstellen einer Prozesssimulation (45) einer automatisierten Anlage (20) für eine Operator Training Station (10), **dadurch gekennzeichnet, dass** das Computerprogrammprodukt (60) zu einem Durchführen eines Herstellungsverfahrens (100) nach einem der Ansprüche 1 bis 8 ausgebildet ist.
